# EUROPEAN PATENT SPECIFICATION

(11) **EP 0 933 565 B1**
(45) Date of publication and mention of the grant of the patent: **26.03.2003**
(21) Application number: 98113057.8
(22) Date of filing: 14.07.1998
(51) Int. Cl.: F16H 61/32

(54) **Actuator for operating speed change controlling valve of an automatic speed changer**
Stellantrieb zur Betätigung eines Übersetzungsverstellungsventiles für ein Automatikgetriebe
Dispositif actuateur pour opérer une valve de commande de changement de vitesse pour une boite de vitesse automatique

(30) Priority: 30.01.1998 JP 1883198
(43) Date of publication of application: 04.08.1999
(73) Proprietor: MITSUBISHI DENKI KABUSHIKI KAISHA, Tokyo 100-8310 (JP)
(72) Inventor: Ohta, Hirohisa, Chiyoda-ku, Tokyo 100-8310 (JP); Kondo, Tetsuji, Chiyoda-ku, Tokyo 100-8310 (JP); Sugiyama, Takeshi, Chiyoda-ku, Tokyo 100-8310 (JP); Sugano, Chiaki, Chiyoda-ku, Tokyo 100-0004 (JP)
(74) Representative: Füchsle, Klaus, Dipl.-Ing.

(56) References cited:
- EP-A- 0 386 771
- EP-A- 0 794 359
- DE-A- 3 502 222
- DE-A- 19 751 307
- JP-A- 7 310 811
- US-A- 5 700 224

## Description

### BACKGROUND OF THE INVENTION

### 1. FIELD OF THE INVENTION

The present invention relates to an actuator provided in an automatic speed changer of an automotive vehicle for operating a speed change controlling valve for controlling a speed change mechanism.

### 2. DESCRIPTION OF THE RELATED ART

Conventionally, in an automatic speed changer for an automotive vehicle, particularly, a CVT controller, a rotational ratio between a shaft on an engine side and a drive shaft is adjusted by changing a ratio of diameters between a driven pulley and a drive pulley which are connected to each other by a metal belt. Also, the diameters of the driven pulley and the drive pulley are continuously changed by changing a width of a belt groove of each pulley. Furthermore, the width of the belt groove is changed by moving a drum provided in each pulley. Each drum is moved by a hydraulic circuit, and the speed change controlling valve for controlling the amount of movement thereof is operated by an actuator.

A gear shift control device for continuously variable transmission comprising the features of the preamble of claim 1 is disclosed in JP 07310811 A.

Conventionally, a miniaturized actuator which can operate the above described speed change controlling valve with high precision under the condition that it may be dipped in a transmission case or oil is splashed if required.

### SUMMARY OF THE INVENTION

The present invention is made to solve the problems mentioned above, and an object of the present invention is to provide an actuator for operating a speed change controlling valve of an automatic speed changer which can improve an operational precision and reduce the total size and the weight.

To this end, according to one aspect of the present invention, there is provided an actuator for operating a speed change controlling valve of an automatic speed changer, adapted to be disposed within a transmission case for receiving a speed change mechanism and the speed change controlling valve for controlling the speed change mechanism, comprising the features of claim 1.

### BRIEF DESCRIPTION OF THE DRAWINGS

In the accompanying drawings:
Fig. 1 is a plan view showing an actuator for operating a speed change controlling valve of an automatic speed changer in accordance with a first embodiment of the present invention;
Fig. 2 is a cross-sectional view taken along a line II-II in Fig. 1;
Fig. 3 is a cross-sectional view taken along a line III-III in Fig. 2;
Fig. 4 is a cross-sectional view taken along a line IV-IV in Fig. 2;
Fig. 5 is an exploded perspective view showing an essential part in Fig. 2;
Fig. 6 is a sectional view showing an essential part of an actuator in accordance with a second embodiment of the present invention;
Fig. 7 is a cross-sectional view showing an essential part of an actuator in accordance with a third embodiment of the present invention; and
Fig. 8 is a cross-sectional view showing an essential part of an actuator in accordance with a fourth embodiment of the present invention.

### DETAILED DESCRIPTION OF THE PREFERRED EMBODIMENTS

Embodiments of the present invention will now be described below with reference to the accompanying drawings.

### First Embodiment

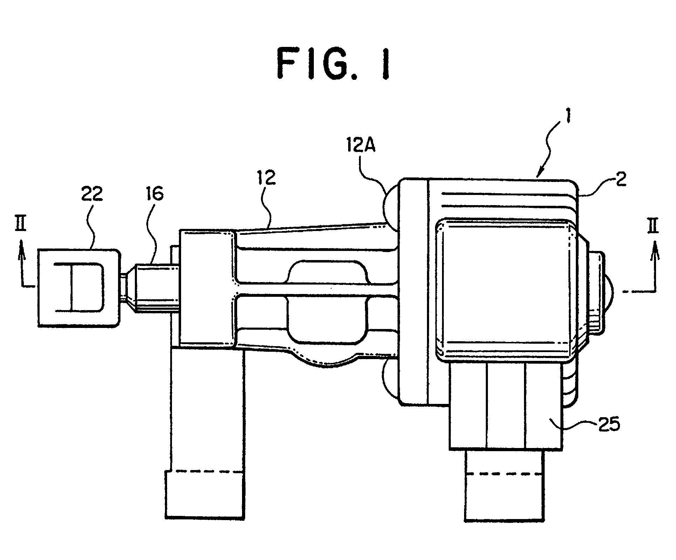

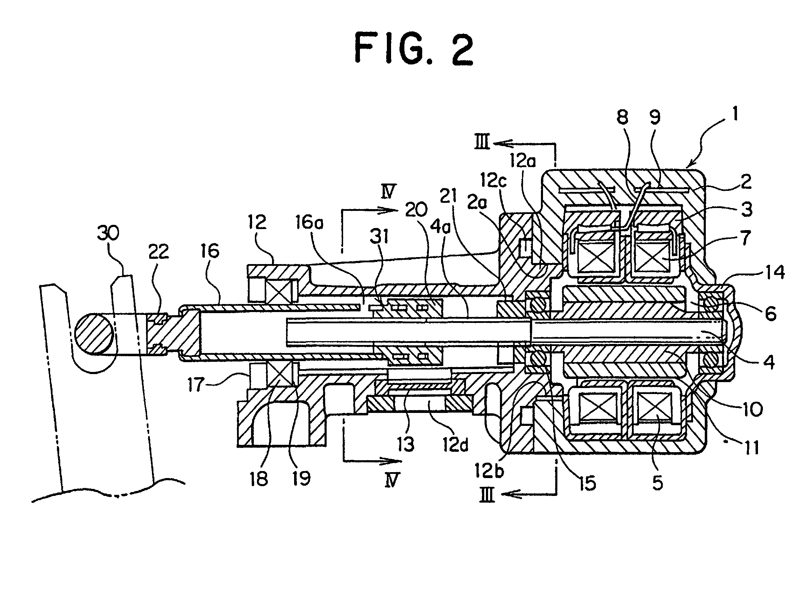

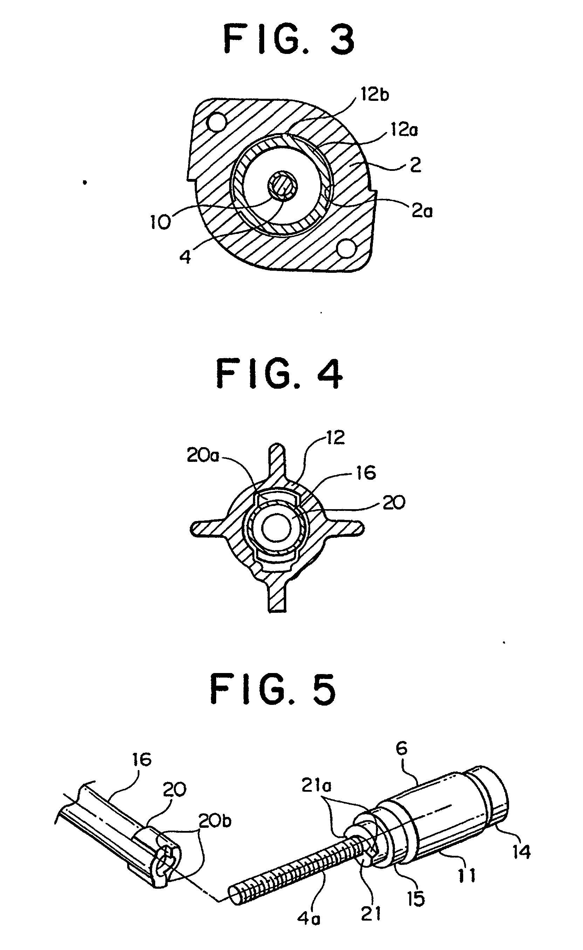

Fig. 1 is a plan view showing an actuator for operating a speed change controlling valve of an automatic speed changer in accordance with a first embodiment of the present invention, Fig. 2 is a cross-sectional view taken along a line II-II in Fig. 1, Fig. 3 is a cross-sectional view taken along a line III-III in Fig. 2, and Fig. 4 is a cross-sectional view taken along a line IV-IV in Fig. 2. In the drawings, a PM type stepping motor 1 has an outer casing member 2 made of resin, a motor body 3 provided within the outer casing member 2 and a shaft 4 to be rotated by the motor body 3.

The motor body 3 has a stator 5 fixed to the outer casing member 2 and a rotor 6 fixed to the shaft 4. The stator 5 is provided with a coil 7, a coil terminal 8 drawn from the coil 7 and a connector terminal 9 to which the coil terminal 8 is connected. The connector terminal 9 is connected to an external connector 25. The rotor 6 is provided wit a bush 10 and a permanent magnet 11.

A sleeve-like housing 12 made of resin is coupled with the outer casing member 2. Also, a housing 12 is fastened to the outer casing member 2 by a plurality of screws 12A extending in parallel with the shaft 4. A circular engagement hole 2a is formed in the outer casing member 2 and an engagement portion 12a inserted into the engagement hole 2a is formed on the housing 12. As shown in Fig. 3, three positioning projections 12b which projected radially and are in contact with an inner circumferential surface of the engagement hole 2a are formed on an outer circumferential surface of the engagement portion 12a. Also, an annular groove 12c is formed in the joint surface with the outer casing member 2 of the housing 12.

A housing communication hole 12d for communicating between the inside and the outside of the housing 12 is provided in the side wall of the housing 12. A filter 13 is provided in the housing communication hole 12d for trapping contamination contained in the oil. The shaft 4 is rotatably held by bearings 14 and 15. The bearing 15 fixed within the housing 12 is of a rubber seal type.

A pipe 16 that is reciprocating in the axial direction of the shaft 4 by the rotation of the shaft 4 is provided at a tip end portion of the housing 12. A proximal end portion of the pipe 16 is inserted into the housing 12, and a distal end portion of the pipe 16 is caused to project from the tip end portion of the housing 12. A pipe communication hole 16a for communicating between the interior of the housing 12 and the interior of the pipe 16 is provided in the pipe 16. A sleeve 17 for guiding the linear movement of the pipe 16, an oil seal 18 for preventing the contamination of the pipe 16 from the outer circumferential portion and a ring-shaped stopper 19 for limiting the front and rear movement of the pipe 16 are fixed to the inner circumferential surface of the tip end portion of the housing 12.

Also, as shown in Fig. 5, a screw portion 4a is provided on the shaft 4. A guide member 20 made of resin and engaged with the screw portion 4a is fixed to the proximal end portion of the pipe 16. As shown in Fig. 4, rotation limit projections 20a for limiting the rotation of the pipe 16 are formed to project radially outwardly from the outer circumferential portion of the guide member 20. Accordingly, the guide member 20 is moved in the axial direction of the shaft 4 by the rotation of the shaft 4. A stopper 21 made of metal for limiting the rearward movement of the pipe 16 is fixed to the shaft 4. The guide member 20 and the stopper 21 have stopper surfaces 20b and 21 a which are perpendicular to the rotational direction of the shaft 4, respectively.

A conversion mechanism 31 has the screw portion 4a, the guide member 20 and the stopper 21. An operating member 22 made of resin and engaged with a rotatable lever 30 connected to a speed change controlling valve (not shown) is mounted at the tip end portion of the pipe 16.

The operation will now be described. When a current is caused to flow through the outer connector 25, the coil 7 is excited so that the rotor 6 and the shaft 4 are rotated together. Since the guide member 20 is engaged with the screw portion 4a of the shaft 4 and the rotation of the guide member 20 is limited, the rotation of the shaft 4 is translated into the linear motion of the guide member 20 and the pipe 16. Since the operating member 22 is mounted at the tip end portion of the pipe 16 and the operating member 22 is engaged with a U-shaped groove of the lever 30, when the pipe 16 is moved, the lever 30 is swung to thereby operate the speed change controlling valve.

In such an actuator, since the lever 30 is operated by using the stepping motor 1 and the conversion mechanism 31 received in the housing 12, it is possible to improve the operational precision in the oil, and to reduce the total size and the weight. Also, since the housing 12 is positioned by forming the positioning projections 12b at the engagement portion 12a, if only the precision of the positioning projections 12b is determined with a high precision, even if the outer casing member 2 and the housing 12 are made of resin, it is possible to prevent the displacement of the housing 12 or the tilt of the housing 12 and the pipe 16 to the shaft 4. It is thus possible to perform assembling with a high precision and to reduce the total size and the weight.

Furthermore, since the housing communication hole 12d for communication between the inside and the outside of the housing 12 is formed in the housing 12, even if it is dipped into the oil in the transmission case, the pressure difference generated between the inside and the outside of the housing 12 is suppressed, and the pipe 16 can be moved smoothly. Also, since the filter 13 is provided in the housing communication hole 12d, it is possible to prevent the contamination in the oil from entering the housing 12 and to maintain the smooth motion of the pipe 16.

Furthermore, since the annular groove 12c is formed in the joint surface between the outer casing member 2 and the housing 12, in the case where the oil enters through a slight gap around the joint surface, the contamination can be entrapped by the groove 12c to thereby maintain the normal operation of the stepping motor 1. Also, since the rubber seal type bearing 15 is provided at the end portion, on the stepping motor 1 side, of the housing 12, it is possible to prevent the contamination from invading from the housing 12 into the motor body 3.

Furthermore, the operating member 22 is made of resin that is superior in anti-wear property and slidability so that the lever 30 can be stably operated for a long period of time. Moreover, since the pipe communication hole 16a for communicating between the interior of the housing 12 and the interior of the pipe 16 is provided in the pipe 16, it is possible to smoothly move the pipe 16 in a linear manner. Also, since the stopper surfaces 20b and 21 a perpendicular to the rotational direction of the shaft 4 are formed on the guide member 20 and the stopper 21, respectively, to thereby limit the rearward movement of the pipe 16, it is possible to maintain the position of the rear end of the pipe 16 more accurately.

Furthermore, since the advance movement of the pipe 16 is limited by the stopper 19 fixed within the housing 12, the structure can be simplified. Furthermore, since the resin-made sleeve 17 is fixed within the housing 12 to guide the linear motion of the pipe 16, it is possible to stabilize the linear motion of the pipe 16 with a simple structure.

### Second Embodiment

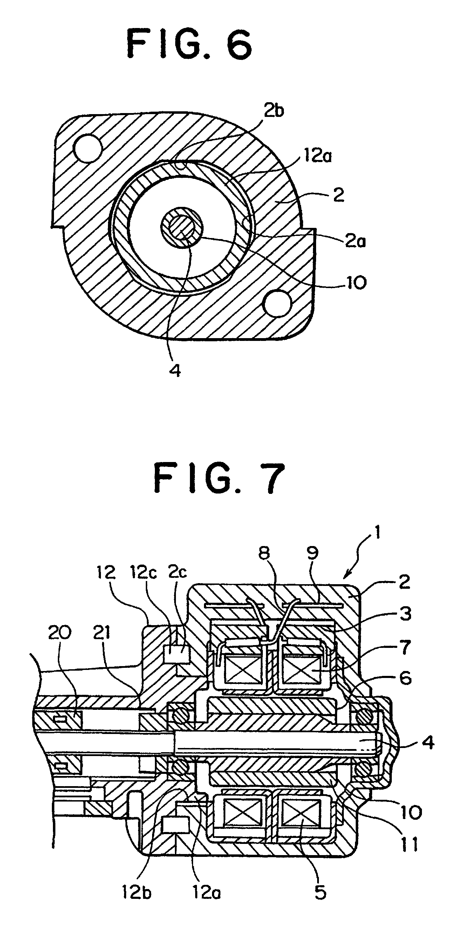

Incidentally, in the foregoing embodiment, the positioning projections 12b are formed on the outer circumferential surface of the engagement portion 12a of the housing 12, but, for example, as shown in Fig. 6, a flat positioning projection 2b may be formed in the inner circumferential surface of the engagement hole 2a of the outer casing member 2. Also, the positioning projection may be formed on both the housing 12 and the outer casing member 2.

### Third Embodiment

Also, in the foregoing embodiment, the annular groove 12c is formed in the joint surface of the housing 12 with the outer casing member 2, but, for example, as shown in Fig. 7, 12c and 2c may be formed on both the housing 12 and the outer casing member 2 and the groove may be formed only in the outer casing member 2.

### Fourth Embodiment

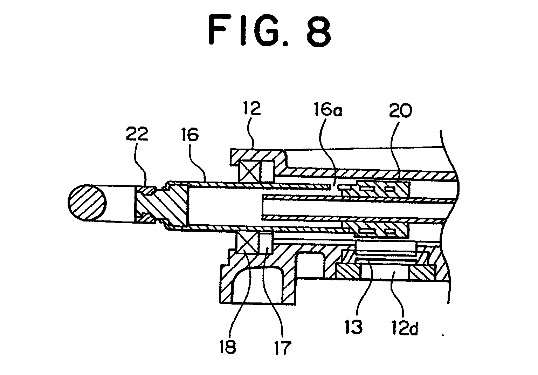

Furthermore, in the foregoing embodiment, the advance movement of the pipe 16 is limited by the stopper 19, but, for example, as shown in Fig. 8, the guide member 20 may be brought into contact with the sleeve 17 for guiding the linear motion of the pipe 16 to thereby limit the advance movement of the pipe 16.

## Claims

1. An actuator for operating a speed change controlling valve of an automatic speed changer, adapted to be disposed within a transmission case for receiving a speed change mechanism and the speed change controlling valve for controlling the speed change mechanism, comprising:
a stepping motor (1) having an outer casing member (2),a motor body (3) provided within said outer casing member (2) and a shaft (4) rotated by said motor body (3) ;
a housing (12) coupled with said outer casing member (2) ;
a pipe (16) having a proximal end portion disposed within said housing (12) arid a distal end portion projecting from said housing (12), said pipe (16) being reciprocatingly moved in an axial direction of said shaft (4) for operating the speed changing controlling valve; and
a conversion mechanism (31) disposed within said housing (12) for translating a rotation of said shaft (4) into a linear motion of said pipe (16),
**characterized in that**
an engagement hole (2a) surrounding said shaft (4) is formed in one of said outer casing member (2) and said housing (12), an engagement portion (12a) inserted into said engagement hole (2a) is formed on the other of said outer casing member (2) and said housing (12), and a plurality of positioning projections (12b) projecting radially are formed on at least one of an inner circumferential surface of said engagement hole (2a) and an outer circumferential surface of said engagement portion (12a), and that said housing (12) and said outer casing member (2) are made of resin.

2. An actuator for operating a speed change controlling valve of an automatic speed changer, according to claim 1, wherein said housing (12) is provided with a housing communication hole (12d) for communicating between an
interior and an exterior of said housing (12), and a filter (13) is provided in said housing communication hole (12d).

3. An actuator for operating a speed change controlling valve of an automatic speed changer, according to claims 1 to 2, wherein an annular groove (12c) is formed in a joint surface between said outer casing member (2) and said housing (12).

4. An actuator for operating a speed change controlling valve of an automatic speed changer, according to any one of claims 1 to 3, wherein a rubber seal type bearing (15) for rotatably holding said shaft (4) is provided 'at an end portion, on a stepping motor side, of said housing (12).

5. An actuator for operating a speed change controlling valve of an automatic speed changer, according to any one of claims 1 to 4, wherein a resin-operating member (22) in engagement with a lever (30) coupled with the speed change controlling valve is mounted at the distal end portion of said pipe (16).

6. An actuator for operating a speed change controlling valve of an automatic speed changer, according to any one of claims 1 to 5, wherein said pipe (16) is formed with a pipe communication hole (16a) for communicating between an interior of said housing (12) and an interior of said pipe (16).

7. An actuator for operating a speed change controlling valve of an automatic speed changer, according to any one of claims 1 to 6, wherein said conversion mechanism (31) includes a screw portion (4a) provided at said shaft (4), a guide member (20) threadedly engaged with said screw portion (4a) and fixed to the proximal end portion of said pipe (16) for being moved in the axial direction of said shaft (4) by a rotation of said shaft (4), and a stopper (21) for limiting a rearward movement of said pipe (16), and stopper surfaces (20b) and (21 a) perpendicular to a rotational direction of said shaft (4) are formed on said guide member (20) and said stopper (21), respectively.

8. An actuator for operating a speed change controlling valve of an automatic speed changer, according to claim 7, wherein a stopper (19) for limiting an advance movement of said pipe (16) by the contact of said guide member (20) is fixed within said housing (12).

9. An actuator for operating a speed change controlling valve of an automatic speed changer, according to any one of claims 1 to 8, wherein a resin-made sleeve (17) for guiding a linear motion of said pipe (16) is fixed within said housing (12).

## Patentansprüche

1. Aktor zum Betätigen eines Steuerventils zum Wechseln der Geschwindigkeit eines automatischen Geschwindigkeitswechslers, welcher Aktor innerhalb eines Getriebegehäuses anordenbar ist, welches Gehäuse einen Geschwindigkeitswechselmechanismus sowie das Steuerventil zum Wechseln der Geschwindigkeit zum Steuern des Geschwindigkeitswechselmechanismus aufnimmt, mit:
einem Schrittmotor (1) mit einem äußeren Gehäuseelement (2), einem in diesem äußeren Gehäuseelement (2) vorgesehenen Motorkörper (3) und einer mittels des Motorkörpers (3) gedrehten Welle (4) ;
einem Gehäuse (12), das mit dem äußeren Gehäuseelement (2) verbunden ist;
einem Rohr (16), dessen proximaler Endbereich in dem Gehäuse (12) angeordnet ist und dessen distaler Endbereich aus dem Gehäuse (12) hervorsteht, wobei das Rohr (16) in axialer Richtung der Welle (4) hin und her bewegt wird, um das Steuerventil zum Wechseln der Geschwindigkeit zu betätigen; und
einem Wandlermechanismus (31), der in dem Gehäuse (12) vorgesehen ist und zum Umwandeln einer Drehung der Welle (4) in eine lineare Bewegung des Rohrs (16) dient,
**dadurch gekennzeichnet, dass**
eine Eingriffsöffnung (2a), die die Welle (4) umgibt, entweder in dem äußeren Gehäuseelement (2) oder in dem Gehäuse (12) ausgeformt ist, dass ein Eingriffsbereich (12a), der in die Eingriffsöffnung (2a) eingefügt ist, an dem anderen dieser beiden Gehäuseelemente (2, 12) ausgeformt ist, und dass mehrere Positioniervorsprünge (12b), die radial hervorstehen, an einer inneren Umfangsfläche der Eingriffsöffnung (2a) und/oder einer äußeren Umfangsfläche des Eingriffsbereichs (12a) ausgeformt sind, und dass das Gehäuse (12) und das äußere Gehäuseelement (2) aus Kunstharz bestehen.

2. Aktor zum Betätigen eines Steuerventils zum Wechseln der Geschwindigkeit eines automatischen Geschwindigkeitswechslers nach Anspruch 1, wobei das Gehäuse (12) mit einer Gehäusekommunikationsöffnung (12d) für die Kommunikation zwischen einem Inneren und einem Äußeren des Gehäuses (12) versehen ist, und wobei ein Filter (13) in dieser Gehäusekommunikationsöffnung (12d) vorgesehen ist.

3. Aktor zum Betätigen eines Steuerventils zum Wechseln der Geschwindigkeit eines automatischen Geschwindigkeitswechslers nach den Ansprüchen 1 bis 2, wobei eine ringförmige Nut (12c) in einer Verbindungsfläche zwischen dem äußeren Gehäuseelement (2) und dem Gehäuse (12) ausgeformt ist.

4. Aktor zum Betätigen eines Steuerventils zum Wechseln der Geschwindigkeit eines automatischen Geschwindigkeitswechslers nach einem der Ansprüche 1 bis 3, wobei ein gummidichtungsartiges Lager (15) zum drehbaren Lagern der Welle (4) an einem Endbereich des Gehäuses (12) auf der Seite des Schrittmotors vorgesehen ist.

5. Aktor zum Betätigen eines Steuerventils zum Wechseln der Geschwindigkeit eines automatischen Geschwindigkeitswechslers nach einem der Ansprüche 1 bis 4, wobei ein Kunstharzbetätigungselement (22) im Eingriff mit einem Hebel (30) gekoppelt mit dem Steuerventil zum Wechseln der Geschwindigkeit am distalen Endbereich des Rohrs (16) angebracht ist.

6. Aktor zum Betätigen eines Steuerventils zum Wechseln der Geschwindigkeit eines automatischen Geschwindigkeitswechslers nach einem der Ansprüche 1 bis 5, wobei in dem Rohr (16) eine Rohrkommunikationsöffnung (16a) zur Kommunikation zwischen einem Inneren des Gehäuses (12) und einem Inneren des Rohrs (16) ausgeformt ist.

7. Aktor zum Betätigen eines Steuerventils zum Wechseln der Geschwindigkeit eines automatischen Geschwindigkeitswechslers nach einem der Ansprüche 1 bis 6, wobei der Wandlermechanismus (31) einen Schraubenbereich (4a) beinhaltet, der an der Welle (4) vorgesehen ist, ein Führungselement (20), das mit dem Schraubenbereich (4a) in Gewindeeingriff ist und am proximalen Endbereich des Rohrs (16) befestigt ist, um in axialer Richtung der Welle (4) durch eine Drehung der Welle (4) bewegt zu werden, und einen Anschlag (21) zum Begrenzen einer Rückwärtsbewegung des Rohrs (16), und wobei Anschlagflächen (20b) und (21a) senkrecht zu einer Drehrichtung der Welle (4) an dem Führungselement (20) bzw. dem Anschlag (21) ausgeformt sind.

8. Aktor zum Betätigen eines Steuerventils zum Wechseln der Geschwindigkeit eines automatischen Geschwindigkeitswechslers nach Anspruch 7, wobei ein Anschlag (19) zum Begrenzen einer Vorwärtsbewegung des Rohrs (16) durch den Kontakt des Führungselements (20) in dem Gehäuse (12) befestigt ist.

9. Aktor zum Betätigen eines Steuerventils zum Wechseln der Geschwindigkeit eines automatischen Geschwindigkeitswechslers nach einem der Ansprüche 1 bis 8, wobei eine aus Kunstharz gemachte Hülse (17) zum Führen einer Linearbewegung des Rohrs (16) in dem Gehäuse (12) befestigt ist.

## Revendications

1. Actionneur destiné à faire fonctionner une vanne de commande de changement de vitesse d'un dispositif de changement de vitesse automatique, apte à être mis en place dans un boîtier de transmission destiné à recevoir un mécanisme de changement de vitesse et vanne de commande de changement de vitesse destinée à commander le mécanisme de changement de vitesse, comprenant :
un moteur pas à pas (1) comportant un élément formant boîtier extérieur (2), un corps de moteur (3) installé à l'intérieur dudit élément formant boîtier extérieur (2) et un arbre (4) mis en rotation par ledit corps de moteur (3) ;
un logement (12) accouplé audit élément formant boîtier extérieur (2) ;
un tube (16) comportant une partie d'extrémité proximale disposé à l'intérieur dudit logement (12) ainsi qu'une partie d'extrémité distale faisant saillie à partir dudit logement (12), ledit tube étant déplacé en va-et-vient dans la direction axiale dudit arbre (4) en vue de faire fonctionner la vanne de commande de changement de vitesse ; et
un mécanisme de conversion (31) mis en place à l'intérieur dudit logement (12) en vue de transformer une rotation dudit arbre (4) en un déplacement linéaire dudit tube (16),
**caractérisé en ce qu'**
un trou de mise en prise (2a) entourant ledit arbre (4) est réalisé dans l'un des deux éléments soit ledit élément formant boîtier extérieur (2) soit ledit logement (12), une partie de mise en prise (12a) insérée dans ledit trou de mise en prise (2a) est réalisée sur l'autre desdits éléments, soit l'élément de boîtier extérieur 2, soit ledit logement (12), et une pluralité de saillies de positionnement (12b) faisant saillie radialement sont réalisées sur au moins une surface, soit une surface circonférentielle intérieure dudit trou de mise en prise (2a), soit une surface circonférentielle extérieure de ladite partie de mise en prise (12a), et **en ce que** ledit logement (12) et ledit élément formant boîtier extérieur (2) sont réalisés en résine.

2. Actionneur destiné à faire fonctionner une vanne de commande de changement de vitesse d'un dispositif de changement de vitesse automatique selon la revendication 1, dans lequel ledit logement (12) est muni d'un trou (12d) de communication de logement destiné à établir une communication entre un intérieur et un extérieur dudit logement (12) et un filtre (13) est mis en place dans ledit trou (12d) de communication du logement.

3. Actionneur destiné à faire fonctionner une vanne de commande de changement de vitesse d'un dispositif de changement de vitesse automatique selon les revendications 1 à 2, dans lequel une gorge annulaire (12c) est réalisée dans une surface de jonction entre ledit élément formant boîtier extérieur (2) et ledit logement (12).

4. Actionneur destiné à faire fonctionner une vanne de commande de changement de vitesse d'un dispositif de changement de vitesse automatique selon l'une quelconque des revendications 1 à 3, dans lequel un palier (15) du type à joint de caoutchouc destiné à maintenir de façon rotative ledit arbre (4) est mis en place sur une partie d'extrémité, côté moteur pas à pas, dudit logement (12).

5. Actionneur destiné à faire fonctionner une vanne de commande de changement de vitesse d'un dispositif de changement de vitesse automatique selon l'une quelconque des revendications 1 à 4, dans lequel un élément de fonctionnement (22) en résine qui est en prise avec un levier (30) couplé à la vanne de commande de changement de vitesse est monté sur la partie d'extrémité distale dudit tube (16).

6. Actionneur destiné à faire fonctionner une vanne de commande de changement de vitesse d'un dispositif de changement de vitesse automatique selon l'une quelconque des revendications 1 à 5, dans lequel ledit tube (16) est réalisé avec un trou de communication de tube (16a) en vue d'établir une communication entre l'intérieur dudit logement (12) et l'intérieur dudit tube (16).

7. Actionneur destiné à faire fonctionner une vanne de commande de changement de vitesse d'un dispositif de changement de vitesse automatique selon l'une quelconque des revendications 1 à 6, dans lequel ledit mécanisme de conversion (31) comprend une partie vis (4a) ménagée sur ledit arbre (4), un élément de guidage (20) en prise par vissage avec ladite partie vis (4a) et fixé sur la partie d'extrémité proximale dudit tube (16), afin d'être déplacé dans la direction axiale dudit arbre (4) par la rotation dudit arbre (4), et une butée (21) destinée à limiter le déplacement dudit tube (16) vers l'arrière, et des surfaces de butée (20b) et (21a) perpendiculaires à la direction de rotation dudit arbre (4) sont réalisées respectivement sur ledit élément de guidage (20) et sur ladite butée (21).

8. Actionneur destiné à faire fonctionner une vanne de commande de changement de vitesse d'un dispositif de changement de vitesse automatique selon la revendication 7, dans lequel une butée (19) destinée à limiter le déplacement dudit tube (16) vers l'avant par le contact avec ledit élément de guidage (20) est fixée à l'intérieur dudit logement (12).

9. Actionneur destiné à faire fonctionner une vanne de commande de changement de vitesse d'un dispositif de changement de vitesse automatique selon l'une quelconque des revendications 1 à 8, dans lequel un manchon (17) réalisé en résine, destiné à guider le déplacement linéaire dudit tube (16) est fixé à l'intérieur dudit logement (12).
